# EUROPEAN PATENT SPECIFICATION

(11) **EP 4 328 012 B1**
(45) Date of publication and mention of the grant of the patent: **26.08.2026**
(21) Application number: 23162517.9
(22) Date of filing: 17.03.2023
(51) Int. Cl.: B29C 70/46, B29B 17/00, B29C 67/04

(54) **PROCESS FOR OBTAINING A LAYERED COMPOSITE MATERIAL, LAYERED COMPOSITE MATERIAL AND ITS USES**
VERFAHREN ZUR HERSTELLUNG EINES SCHICHTVERBUNDWERKSTOFFS, SCHICHTVERBUNDWERKSTOFF UND DESSEN VERWENDUNGEN
PROCÉDÉ D'OBTENTION D'UN MATÉRIAU COMPOSITE STRATIFIÉ, MATÉRIAU COMPOSITE STRATIFIÉ ET SES UTILISATIONS

(30) Priority: 25.08.2022 RO 202200516
(43) Date of publication of application: 28.02.2024
(73) Proprietor: Institutul National de Cercetare-Dezvoltare pentru Fizica Materialelor (INCDFM), Magurele, Ilfov (RO)
(72) Inventor: Badica, Petre, 010867 Bucuresti (RO); Grigoroscuta, Mihai-Alexandru, 061976 Bucuresti (RO); Burdusel, Mihail, 030834 Bucuresti (RO); Costescu, Maria Ruxandra, 077127 Magurele (RO)
(74) Representative: Dobrescu, Teodora Valentina

(56) References cited:
- JP-A- H09 131 828
- ADESINA OLUWAGBENGA TOBI ET AL: "Spark plasma sintering of polymer and polymer-based composites: a review", THE INTERNATIONAL JOURNAL OF ADVANCED MANUFACTURING TECHNOLOGY, SPRINGER, LONDON, vol. 116, no. 3-4, 29 May 2021 (2021-05-29), pages 759 - 775, XP037529832, ISSN: 0268-3768, [retrieved on 20210529], DOI: 10.1007/S00170-021-07349-Z

## Description

### Field of the invention

The present invention refers to a process for obtaining layered composite materials comprising plastic materials and intermediate layers as reinforcing elements that can be selected from organic or inorganic materials with different physico-chemical properties.

Also, the invention provides the layered composite material obtained according to the process of the invention and uses of this material in various fields of activity, such as, but not limited to, the electronic industry, the power and automotive industry, the industry of advanced packaging for preserving food, biomedical applications that require special functions, the energy industry in the manufacture of solar cells and batteries, in construction, the aerospace industry, the furniture industry and textiles.

### State of the art

Concerns regarding the recycling of plastic waste, which are extremely difficult to degrade and neutralize, have become increasingly important in recent years, especially from the perspective of their use in combination with other materials, which has led to obtaining some materials with new properties, reducing at the same time the amount of plastic waste resulting from packaging and limiting pollution by reusing them.

Japanese patent application no. JP H09 131828 A (KANEGAFUCHI CHEMICAL IND, 20 May 1997) in accordance with the preamble of claim 1 discloses a process for obtaing a layered composite material comprising the placing at least one first layer and a second layer, one on top of the other, wherein the first layer is a plastic material and the second layer is a reinforcing element and processing thereof by applying intense electric field sintering technique (SPS) in a mold to obtain a layered composite material.

Composite materials [A. Kelly and C. Zweben, Comprehensive Composite Materials, Pergamon Press, Elsevier Science (2000) ISBN 978-0-08-042993-9*], [*M. Kutz, Mechanical engineers' handbook - 3rd ed., Materials and Mechanical Design, John Wiley & Sons, Inc., Hoboken, New Jersey (2006) ISBN-13 978-0-471-44990-4*]* require the existence of at least two different components: the matrix and the reinforcing element(s). Constituent materials have very different chemical or physical properties and are combined to create a material with properties that differ from those of the individual elements. Thus, the composite is designed and manufactured as a specialized material for a specific purpose with special physical, chemical or biological properties. Despite the advantages presented, in practice, in many cases, due to the very different nature of the constituent materials, composites present a series of challenges. These derive from the compatibility aspects of the component materials and are reflected in the technological problems encountered in the manufacturing process of the composites or in achieving the desired functional characteristics. Often, the technological procedure through the physico-chemical processes it entails, will leave its mark on the quality of the composite.

Polymer matrix composite materials are a very widespread class of composites used in countless applications. Although remarkable progress has been made, many polymer matrix composites show no (or very weak) chemical bonding between the matrix and the reinforcing materials due to poor compatibility of the component materials. Therefore, one of the disadvantages that often occurs in the composite materials of the prior art is the breaking or exfoliation of the composite: once the polymer matrix breaks, the reinforcing will not help to preserve the integrity of the composite and will even favor its separation into smaller pieces. Other disadvantages that may appear when obtaining composite materials comprising at least 2 components are:
(i) technical polymers such as (PET, ABS, PVC, PE, PA, PP, PS, PC, PLA, etc.) as well as materials for reinforcing such as metals, ceramics, intermetallic compounds, carbonaceous materials are chemically stable in different environments. For these reasons, achieving surface states between the layers of the composite with the help of chemical media cannot ensure the formation of chemical bonds at the polymer interface and the reinforcing material;
(ii) even if the change of surface states between the component materials of the composite is achieved, this activation is short-lived to allow direct 'welding/bonding' by chemical bonding at the matrix-reinforcement interface.
(iii) direct bonding without melting between two different materials (e.g. between polymer matrix and reinforcement) is a challenge because in the case of melting in the contact area, that region may have different characteristics/properties compared to the original material (in the volume). Even directly 'gluing' two pieces of the same technical polymer (e.g. PET with PET) without melting is difficult;
(iv) the use of adhesives, involves a series of problems such as toxicity, pollution or modification of the properties of the composites;
(v) in the conventional methods of obtaining the composite (injection or hot extrusion) which imply the complete melting of the polymer, due to the high processing temperatures and longer processing times required, undesirable processes of oxidation-degradation of the polymer may occur, and upon cooling, due to the different density of the amorphous phase and the crystalline phase, the contraction may be uneven and may induce tensions that will favor the formation of cracks.

It is known from the specialized literature that the modification of the surface materials (with the activation of surface chemical species) can be achieved by chemical or physical methods. In chemical methods [P. Fabbri and M. Messori, Modification of Polymer Properties 109-130 (2017*)]* usually liquid chemical media are used that interact with the surface of the material. Extraction of the liquid, drying and reintegration of the material into the ambient environment is often complex and difficult to control so that the life time of the active species is too short resulting in passivation of the surface before the desired chemical 'glue' bonds between the surfaces to be bonded are achieved. On the other hand, of much interest are physical methods of surface irradiation such as those with IR, ultrasound, laser, microwave [C. Worrall, Joining of Fibre-Reinforced Polymer Composites, A Good Practice Guide, Composites UK Ltd (2020*)*], *UV* [M. Gonda et al., International Journal of Adhesion and Adhesives 100 102604 (2020*)*], ions [A. Kondyurin and M. Bilek, Ion Beam Treatment of Polymers: Application Aspects from Medicine to Space, Elsevier (2010) ISBN 0080556744*]* or plasma [J. M. Grace and L.J. Gerenser, Plasma treatment of polymers, Journal of Dispersion Science and Technology 24 305-341 (2003*)*]*, [*E. M. Liston et al., Journal of Adhesion Science and Technology 7 1091-1127 (1993*)*]*.* These methods can generate active radicals on the surface with a reasonably long lifetime. The irradiated material is not affected in volume, the melting of the material at the bonding interface can be avoided, and the bonding is direct without adhesives. After irradiation, the materials are usually subject of hot pressing in controlled atmospheres to form the desired chemical bonds at the interface between them. However, this process is quite long in terms of processing time and contains two steps. A one-step process with shorter time of achievement would be useful, efficient and more cost-effective.

It is desirable that technical polymers in packaging, especially those with very long degradation times, to be recycled. One of the solutions is to use them in composite materials for different applications. The present application addresses the previously mentioned disadvantages and others existing in the state of the art and offers new possibilities in achieving of new composites with plastic material matrices, multilayered wherein the order/arrangement/overlapping of the layers can be designed according to the needs of the target application by making a direct 'bonding' with the formation of chemical bonds at the interface between the layers and without using adhesives.

**The purpose** of the invention is to provide **a process** for obtaining a layered composite material comprising placing at least one first layer and a second layer, one on top of the other, wherein the first layer is a plastic material and the second layer is a reinforcing element and processing thereof by applying intense electric ( also known as Field Assisted Sintering Technique - FAST, Spark Plasma Sintering - SPS, Pulsed Electric Current Sintering - PECS, or Plasma Pressure Compaction - P2C) in a mold to obtain a layered composite material. The process according to the invention has the advantage of applying only one step, which considerably reduces costs compared to the processes already existing in the state of the art.

The purpose of the invention is achieved by providing the process for obtaining a layered composite material comprising placing at least one first layer and a second layer, one on top of the other, wherein the first layer is a plastic material, and the second layer is a reinforcing element and processing thereof by applying the intense electric Field Assisted Sintering Technique (SPS) in a mold to obtain a layered composite material. In a particularly preferred embodiment, the plastic material is preferably in the form of foil.

The process provided by the invention and the layered composite material obtained from it eliminate the previously mentioned disadvantages from the state of the art because strong chemical bonds are formed between the layers of the composite material.

### Brief description of the invention

The present invention provides a process for obtaining a layered composite material as defined in claim 1, comprising placing at least one first layer and a second layer, one on top of the other, wherein the first layer is a plastic material and the second layer is a reinforcing element and processing thereof by applying intense electric Field Assisted Sintering Technique (SPS) in a mold to obtain a layered composite material.

The process according to the invention discloses, in a preferred embodiment, the layered composite materials wherein the layer with the reinforcing element(s) overlaps totally or partially over the layer of plastic material. Thus, one can imagine composite materials that can have, in the same layer of reinforcing element(s), one or more different reinforcing elements with the same or different properties. In a particularly preferred embodiment, the plastic material is preferably in the foil form.

In a specific embodiment, the process for obtaining a layered composite material comprises placing the following layers in the following order:
- a first layer of plastic material
- a second layer comprising a reinforcing element
- a third layer of plastic material
- a fourth layer comprising a reinforcing element
- a fifth layer of plastic material.

In another specific embodiment, the process for obtaining a layered composite material comprises placing the following layers in the following order:
- a first layer of plastic material
- a second layer comprising a reinforcing element
- a third layer comprising a reinforcing element
- a fourth layer of plastic material.

The layer of the reinforcing element can be totally or partially superimposed on the layer of plastic material, resulting in composite materials that can have in the same layer of reinforcing element, one or more different reinforcing elements, with the same or different properties.

The number of layers of plastic material and the number of layers of reinforcing elements can be varied depending on the purpose for which the composite material is designed.

One of the advantages of this process is that it takes place in a single step, without the use of chemical adhesives.

In a preferred embodiment, the plastic material is in the form of foil from plastic packaging.

Another advantage of the present application is to provide a layered composite material that allows it to be designed:
- depending on the use, namely depending on the desired properties, the material can be built using certain layers, a different number of layers (e.g. a certain number and type of reinforcement elements);
- the layered material obtained can have different geometric shapes (cylindrical, semi-cylindrical, square, hexagonal, triangular prisms, combinations thereof) defined by the mold used at SPS. The composite layers can have identical or different planar shapes (for example, certain areas are cut out of the plastic or reinforcement material, i.e. the overlap of the different layers can be partial or total). Controlling the shapes of the component layers and the composite ensures an easy integration into the geometric configurations of the devices.

The composite materials obtained can be used in various fields such as, but not limited to, applications in the electronics industry (e.g. moisture/electromagnetic protection of electronic circuits; connectors, coated/embedded conductors and insulators, devices and sensors), power and transport industry (thermal and/or electromagnetic protection/isolation of electric motors, corrosion protection), advanced packaging industry for food preservation (through oxygen protection or inert gas storage), biomedical applications requiring special functions (e.g. antimicrobials, self-cleaning), the energy industry in the manufacture of solar cells (given that the transparency of SPS-processed PET films is preserved) and batteries, in construction, the aerospace industry, the furniture industry and textiles.

Depending on the functional parameters of a certain application, the layered composite material can be designed with the desired parameters using different layers, with certain properties required for a certain application. In some cases, the resulting material is even the functional part, and in others, the part will be obtained from this material or the material will be integrated into a device.

Also, the design principles of the composite material and subsequently of the design of the parts/products can be applied depending on the known requirements for the application. In this application, layered composite materials are described without being limited to a targeted application. Using the information from this application, each user of these layered composite materials will design the material with the desired optimal properties/geometry/configuration according to his needs.

### Definitions:

In order to avoid any ambiguities, the following terms and expressions will be defined for the purposes of the present invention:
*PET* is polyethylene terephthalate;
*ABS* is acrylonitrile butadiene styrene;
*PVC* is polyvinyl chloride;
*PE* is polyethylene;
*PA* or nylon is polyamide;
*PP* is polypropylene;
*PS* is polystyrene;
*PC* is polycarbonate;
*RE* are rare earths selected from Scandium, Yttrium, Lanthanum, Cerium, Praseodymium, Neodymium, Samarium, Europium, Gadolinium, Terbium, Dysprosium, Holmium, Erbium, Thulium, Yterbium, Lutetium;
The FAST, SPS, PECS or P2C method is a sintering technique in an intense electric field: it consists in applying an electric field (continuous current superimposed with current pulses) and a uniaxial pressure to a sample, placed in a mold.

### Figures:

- Fig. 1 shows the diagram for the manufacture of layered composites made of plastic foils, preferably PET cut/croped from packaging, and between which intermediate layers are inserted that can be selected from foils, powders or fibers of organic or inorganic materials. These foils/raw materials are inserted in the desired order into a graphite mold and the assembly is processed by the SPS method.
- Fig. 2 shows the graph of the processing conditions SPS (pressing force and temperature as a function of time) for: (i)- PET-PET samples (A-C, Table 1) and three-layer composite samples I-VIII (Table 2); (ii)- for PET samples with three (sample VIII, Table 2) or ten (sample IX, Table 2) layers (PET foils). All samples are discs/cylinders with a diameter of 20 mm. The dwell time at the maximum SPS processing temperature is shorter for samples with 2 or 3 layers compared to the time for 10 layers;

- Fig. 3 shows the X-ray photoemission spectra (XPS) measured on the PET samples shown in Table 1: (a) - the whole spectrum; (b) - detail for carbon (C1s); (c) - detail for oxygen (O1s). The samples denomination are as in Table 1.
- Fig. 4 shows the X-ray diffraction spectra measured on PET foils before and after SPS (samples A and B, Table 1).
- Fig. 5 shows examples of layered composites (discs 20 mm in diameter) obtained by SPS: overview and cross-section. The notations of the samples correspond to those in Table 2.
- Fig. 6 shows the unreinforced multilayer PET samples obtained by SPS. Sample notations are as in Table 2.

### Description of the invention

The present invention will be described in detail below.

In a first aspect, the invention provides a process for obtaining a layered composite material as defined in claim 1 comprising placing at least one first layer and a second layer, one on top of the other, wherein the first layer is a plastic material and the second layer is a reinforcing element and processing thereof by applying intense electric field assisted sintering technique (SPS) in a mold to obtain a layered composite material.

The process according to the invention discloses, in a preferred embodiment, layered composite materials wherein the layer with the reinforcing element overlaps totally or partially over the layer of the plastic material. Thus, one can imagine composite materials that can have, in the same layer of reinforcing element, one or more different reinforcing elements (materials), with the same or different properties. In a particularly preferred embodiment, the plastic material is in the foil form.

In a particularly preferred embodiment, the process for obtaining a layered composite material comprises placing between 2 layers of plastic material, preferably in the foil form, of at least one reinforcing element and processing thereof by applying sintering technique assisted by an intense electric field (SPS), within a mold, to obtain a layered composite material.

In a specific embodiment, the process for obtaining a layered composite material comprises placing the following layers in the following order:
- a first layer of plastic material
- a second layer comprising a reinforcing element
- a third layer of plastic material
- a fourth layer comprising a reinforcing element
- a fifth layer of plastic material.

In another specific embodiment, the process for obtaining a layered composite material comprising placing the following layers in the following order:
- a first layer of plastic material
- a second layer comprising a reinforcing element
- a third layer comprising a reinforcing element
- a fourth layer of plastic material.

The layered composite material can have the layer with the reinforcing element completely or partially superimposed on the layer of plastic material.

The number of layers of plastic material and the number of layers of reinforcing elements can be varied depending on the purpose for which the composite material is designed. Also, in a layered composite material obtained by the process of the invention, the layers of plastic material and the layers of reinforcing elements can be the same or different and are chosen depending on the purpose for which the material is designed.

In a particularly preferred embodiment, the plastic material is preferably in the foil form. In a preferred embodiment, the foils is from waste such as preferably, but not limited to, packaging. The process according to the present invention can use plastic foils selected from PET, ABS, PVC, PE, Nylon, PA, PP, PC, PS, etc., preferably PET. In an even more preferred embodiment, the plastic is from plastic containers used for bottled water. In a particularly preferred embodiment, the layer of plastic material, preferably in the form of plastic foil, has a maximum thickness of 1 mm, preferably 0.1-0.4 mm.

In one embodiment, the reinforcing elements are selected from organic or inorganic materials in the form of foil, fibers or powders with different physico-chemical properties.

In a particularly preferred embodiment, the reinforcing elements are selected from:
- inorganic materials with electrically or thermally conductive/insulating properties selected from the following categories: metals or alloys preferably selected from, but not limited to, Cu, Au, Ti, Al, alloys thereof (steels, Al alloys, Ni, Mg, Ti, etc), ceramic materials preferably selected from, but not limited to, Al₂O₃, B₄C, BN, SiC, SiO₂/glass, MgB₂, etc., carbonaceous materials preferably selected from, but not limited to, carbon fibers , graphene, and
- organic materials with electrically or thermally conductive/insulating properties preferably selected from, but not limited to, wooden materials such as wood fibers, bamboo, cotton, linen, cane.

In a particularly preferred embodiment, the reinforcing element can be a metal foil, electrically and thermally conductive, selected from Cu, Au, Ti, Al or alloys thereof with a thickness in the range of 5-20 µm, preferably 11 µm (see Table 2). In the case of layered composite materials wherein the reinforcing layer is metallic, the composite will be a good electrical conductor in certain areas or on the entire surface of the layer and can be used in applications where such a material is needed (e.g. PET-Cu- PET wherein the metal foil can be cut in the form of coils, for electromagnetic applications, electrical fuses, switches, resistive heating elements in the electrotechnical, automotive, household appliance, sensor industry, Table 3, No. 1).

In another preferred embodiment, the composite can have 2 different metal reinforcement layers and thus will have 2 conductive channels each with certain electrical parameters (e.g. PET-Al-Cu-PET for electromagnetic applications, electrical fuses, switches, resistive heating elements in the electrotechnical, automotive, household appliances, sensors industry, Table 3, No. 10).

In another preferred embodiment, the composite can have 2 different reinforcement layers, one with electrical conduction and the other with thermal conduction (PET-Cu-C-PET foil for resistive heating elements, Table; 3, No. 11).

One can imagine many such composites with special properties depending on the target applications (Table 3). In other cases, the property of the composite will be defined by the property of one of the reinforcing elements or by the areas where the reinforcing elements are located (in case the overlap of the layers is partial). These composites combine several properties and become multifunctional. On the other hand, the plastic material on the outside of the layered composite material is chemically stable and therefore useful as anti-corrosion protection for the metal.

In a preferred embodiment, the reinforcing element is in powder form. The thickness of the powder layer is in the range from 1 to 50 µm, preferably the thickness of the powder layer is 40 µm. Different powders can be used depending on the requirements of the material, MgB₂ powders being particularly preferred so that the composite layered material has diamagnetic properties in the superconducting state (Table 3, No. 4), Al₂O₃, B₄C, BN, Si, SiC, SiO₂/glass for dielectric properties (Table 3, No. 3) and/or mechanical resistance (Table 3, No. 7) and/or anticorrosive, or SiO₂/glass for optical properties (for example the composite is translucent, Table 3, No. 6).

In a preferred embodiment, the reinforcing element is a carbonaceous material selected preferably from, but not limited to, carbon fibers or graphene (powder). In a preferred embodiment, the reinforcing element is a carbon fiber with a thickness chosen in the range of 0.05-0.7 mm, in particular with a thickness of 0.4 mm. The composite made has thermal conduction properties due to the carbon fibers and can be used in applications dedicated to this purpose. (e.g. PET - Carbon fiber - PET for resistive heating elements in the electrotechnical, household appliance, automotive industry, Table 3, No. 2)

In a preferred embodiment, the reinforcing element is an organic wooden material selected from, but not limited to, wood fibers, bamboo, cotton, linen, cane. In a preferred embodiment, the reinforcing element is a wood fiber with a thickness chosen in the range of 0.05-0.1 mm, in particular with a thickness of 0.08 mm. The composite produced has thermal, electrical and anti-corrosion insulating properties. Wood fibers also change the mechanical properties in the sense of increasing the mechanical resistance (eg PET-organic-PET for thermal and electrical insulation elements in the electrotechnical, energy, construction, furniture, packaging industry, Table 3, No. 12).

In a particularly preferred embodiment, the reinforcing element is selected from inorganic materials with superconducting properties such as: metals or alloys selected preferably from, but not limited to, Nb, Nb₃Sn, NbTi, etc. and ceramic materials selected preferably from, but not limited to, MgB₂, YBa₂Cu₃O₇, Bi₂Sr₂CaCu₂O_{X}, Bi₂Sr₂Ca₂Cu₃O₁₀, preferably in the form of foil, powders or fibers (known in specialized literature as whiskers or monocrystalline whiskers). In a preferred embodiment, the reinforcing element is in powder form. The thickness of the powder layer is in the range from 0.1 to 50 µm, preferably the thickness of the powder layer is 40 µm. The composite produced has diamagnetic properties in a superconducting state and electrical conduction (PET-superconductor-PET, current limiters, magnetic shields/filters/separators, magnetic sensors for the power industry, transports, energy, medical, space, Table 3, No. 4).

In another particularly preferred embodiment, the reinforcing element is selected from inorganic materials with magnetic/non-magnetic properties such as metals/alloys selected preferably from, but not limited to, materials based on Fe, Ni, Co, RE (wherein RE are rare earths), Al, Au, Ag, Cu and ceramic materials selected preferably from, but not limited to, NdFeB, BiMn, REFeO₃ preferably in foil or powder form. The preferred composites, made with powders (in layers with thicknesses of 1-50 µm, preferably 40 µm), especially with Al are non-magnetic and those with Fe, BiMn or NdFeB are ferromagnetic (the former is soft-magnetic and the others two are hard-magnetic). Permanent magnets, sensors, magnetic components for the automotive, electrotechnical, mechanical, processing industry can be obtained (Table 3, No. 5).

In another preferred embodiment of the invention, the reinforcing element is selected from inorganic materials with optical properties such as ceramic materials preferably selected from SeTe, GeTe, ZnS, Ce doped with rare metals RE in powder form (with a layer thickness of 1-50 µm in diameter and particle size of 0.2-1 µm). The preferred composites, made with powders (in layers with thicknesses of 1-50 µm, preferably 40 µm) have optical properties, preferably in the visible or infrared spectrum or have upper or lower optical conversion properties (optical converters, luminescent radiation filters, mirrors, light radiation attenuators, components in solar cells for the automotive, energy, optical, optoelectronic industries, Table 3, No. 6)

In another embodiment of the invention, the reinforcing element is selected from:
- inorganic materials with mechanical properties: selected preferably from metals/alloys, but not limited to Cu, Au, Ti, Al, alloys thereof, ceramic materials selected preferably, but not limited to, carbides, borides , nitrides, oxides: B₄C, SiC, TiB₂, MgB₂, BN, Al₂O₃, SiO₂/glass, carbonaceous materials selected preferably, but not limited to, carbon fibers, graphene and
- organic materials with mechanical properties selected from wooden materials, preferably, but not limited to, wood fibers, bamboo, cotton, linen, cane.

The presence of metal foils in the composite (preferably with a thickness of 0.1-0.4 mm), powders (layers of 1-50 µm) or fibers (individual bulk fibers or fabrics with a layer thickness of up to 0.4 mm) provides mechanical resistance (Table 3, No. 7).

In another embodiment of the invention, the reinforcing element is selected from:
- inorganic materials with biological properties (inert or active): metals preferably selected from, but not limited to, Ag, Cu, ceramic materials preferably selected from MgB₂, Ca₅(PO₄)₃(OH), CaO, CaCO₃, NaCl, MgO, SiO₂, AlₓO₃, ZrO₂, Si/glass and
- organic materials with biological properties (inert or active) of the wooden type materials selected preferably from, but not limited to, wood fibers, bamboo, cotton, linen, cane. Preferred composites are with powder reinforcement, preferably Ag, Cu, or MgB₂ (layers of 1-50 µm, preferably 40 µm) that induce bioactive properties such as antimicrobial or antitumor ones. MgB₂ is biodegradable and biocompatible, being useful for obtaining the composites with controlled release of Mg and B. The powders for reinforcement, preferably Ca₅(PO₄)₃(OH), CaO, CaCO₃, NaCl and MgO can be biodegradable (when effects of, for example, bone or skin regeneration are targeted). Wooden or ceramic powders and fibers are biocompatible (and often bioinert) (Table 3, No. 8).

In another preferred embodiment, the reinforcing element is selected from organic materials with acoustic properties of the wooden type materials selected preferably from, but not limited to, wood fibers, bamboo, cotton, linen, cane. These composites can be used in the manufacture of musical instruments or the construction of furniture and accessories for rooms with controlled sound (Table 3, No. 13).

In another preferred embodiment, the reinforcing element is selected from organic or inorganic materials with different chemical stability/degradation properties (controlled degradation): metals/alloys type selected preferably, but not limited to those based on Zn, Mg, Fe, Ca, Na, Ti, etc., and organics of the wooden type materials selected preferably, but not limited to, wood fibers, bamboo, cotton, linen, cane (Table 3, No. 14).

Also, according to the process of the invention, can be obtained layered composite materials comprising a plurality of layers made of plastic material separated from each other by one or more reinforcing elements. In a preferred embodiment, the plastic material is in the form of plastic foil. In particular, the plastic foil comes from water containers.

It should be noted that a multitude of reinforcing materials can be used depending on the purpose for which the layered composite material is designed. The present invention provides only a few examples which should not be considered limiting in any way. Through the process proposed in this application, composites with overlapping layers of electrical, magnetic, optical, etc. materials can be imagined and built, which can be used as devices and/or sensors (based on cumulative or synergistic physical/chemical effects).

The position of the reinforcing element within the composite can be another advantage for functionality and/or integration and can be chosen depending on the desired application.

The application of the sintering technique assisted by an intense electrical field (spark plasma sintering, SPS) on polymer powders (PA, PTFE, PLA) or on mixtures of polymer powders and metal powders (PI/carbon nanotubes, PI/diamond, PEDOT:PSS/Bi2S3, PEDOT:PSS/Bi2S3 nanotubes, PEDOT:PSS/CuSnSe₃, PEDOT:PSS/Bi_{0.5}Sb_{1.5}Te₃, PI/AIN, Pl/Al, PI/Cu, PLA/graphene) produced massive sintered bodies [O. T. Adesina et al., The International Journal of Advanced Manufacturing Technology 116 759-775 (2021*)*]*.* Sintering processes involve mass transfer by diffusion and viscous flow. In the case of the SPS, the specialized literature indicates the possibility of charge accumulations on the surface of two neighboring particles which, by discharging into the gas between them, can generate plasma and will contribute to mass transfer, especially through evaporation-condensation because of the very high temperatures of the plasma. Through this process, for example, it is considered possible to clean the surfaces of the involved components so that diffusion between particles becomes easy and, thus, sintering can be initiated/activated. From the above mentioned above results that the density of interfaces at contacts which depends on the particle size will influence the efficiency of sintering by the SPS. Large particle sizes or the use of solid bodies (e.g. foils or plates) to be bonded will require long or too long sintering times to be practically useful. A straightforward solution would be to increase the processing temperature or introduce some additions that facilitate the formation of a liquid phase for acceleration of the mass transfer processes. In the case of polymers, such a solution is not desirable for the reasons listed above.

The present invention discloses the possibility of using the SPS technique to produce the direct (glue-free) 'bonding' of different materials (polymer-metals; polymer-paper, polymer-carbon fibers, polymer-textiles, etc.). Through this direct 'bonding' approach, layered composites with two or more layers are obtained. In the case of multilayer composites this approach allows the composite to be designed and manufactured with the desired layer sequence. For the plastic material, plastic foils can be used, preferably from packaging (PET from water containers), and for the reinforcing element, different materials were used as indicated above. The only step prior to the process is an alcohol cleaning of the plastic material, namely the recycled foils. The raw materials did not undergo any other kind of preparation/processing step, the process presented by the invention being advantageously carried out in a single step and in a short period of time (a few minutes), without melting and by activating the surface species that lead to direct bonding of the component layers into a composite massive body material.

**The process according to the invention** is carried out by applying the SPS technique by placing at least one first layer and a second layer, one on top of the other, into the mold. The mold loaded with the sample is placed in the SPS furnace and aligned between the (vertical) pistons on which a uniaxial pressing force is applied. The process is characterized by the following steps:
- *vacuum step*: before the heating stage and after placing the mold with the sample in the SPS furnace, repeated vacuum (the pressure in the furnace varies between 10-60 Pa) - Ar-gas-cleaning (by introducing Ar up to a pressure of 0.8 - 0.9 atm) cycles are applied at room temperature. Two or three vacuum - Ar-gas-cleaning cycles are carried out. The working pressure of the vacuum in which are performed the next steps of processing is 10-60 Pa.
- *the heating step* takes place at a speed of 50 - 200°C/min, preferably 100°C, the uniaxial pressure on the sample during heating is in the range from 10 to 100 MPa, preferably at 16 MPa, the dwell time at maximum temperature (0.3 - 0.8 of the melting temperature of the plastic material from the composite) is between 1 - 10 minutes, preferably 2 minutes; it is performed using electric currents with a continuous component over which a pulsed component is superimposed consisting of groups composed of 12 pulses "on" and 2 pulses "off" with a total duration of 40 ms. Between pulses the pause is of 2 ms.
- *the cooling step* which is done exponentially, by stopping the power supply to the heat source and decreasing the uniaxial pressure on the sample so that at room temperature it reaches the value of 6 MPa in a time interval between 5 and 10 minutes, depending on the size of the sample. At room temperature, Ar is introduced up to atmospheric pressure, which allows opening the furnace.

The process according to the invention discloses, in a preferred embodiment, layered composite materials wherein the layer with the reinforcing element overlaps totally or partially over the layer of plastic material.

The process disclosed by the present invention eliminates existing technical difficulties in the field, achieving layered composite materials obtained by direct bonding, without adhesives or melting, in a single step, within a few minutes, with the formation of chemical bonds between the layers of the composite that provide the composite with different optical, electrical, magnetic, mechanical, degradation or biological properties. Another particularly important advantage resulting from application of this technique is that the layered composite material obtained can be designed from the beginning for a certain purpose and with certain characteristics and in certain areas.

In another aspect, a **layered composite material** is obtained according to the process of the invention comprising plastic materials, preferably in the form of plastic foils, preferably from plastic waste, between which there can be at least one reinforcing element that can be selected from organic or inorganic materials. This layered composite material is obtained directly using the process disclosed by the invention. Composite materials have at least two layers and can be plastic-ceramic material (e.g. PET-Si), plastic-metal (e.g. PET-Al), plastic-organic material (PET-textile material). In another aspect, the invention provides a layered composite material comprising a plurality of layers formed of plastic material, preferably plastic foils, alternating the reinforcing layers as required in the applications (PET-BiMn-Cu-PET, Table 3, No . 15).

In another aspect, the layered composite material, as obtained can be in the electronics industry (preferably for moisture/electromagnetic protection of electronic circuits; connectors, coated/embedded conductors and insulators, devices and sensors), power and transport industries (preferably for thermal and/or electromagnetic protection/insulation of electric motors, protection against corrosion), packaging industry (for oxygen protection or storage of inert gases), biomedical applications with special functions (preferably antimicrobial, self-cleaning, antitumor), energy industry for manufacturing solar cells and batteries, in construction, aerospace, furniture and textiles.

Table 3 shows some preferred embodiments of layered composite materials that can be obtained according to the invention, their uses and their field of use.

### Specific embodiment

Further, an specific embodiment is given which has an illustrative purpose and should not be considered as limiting the invention in any way.

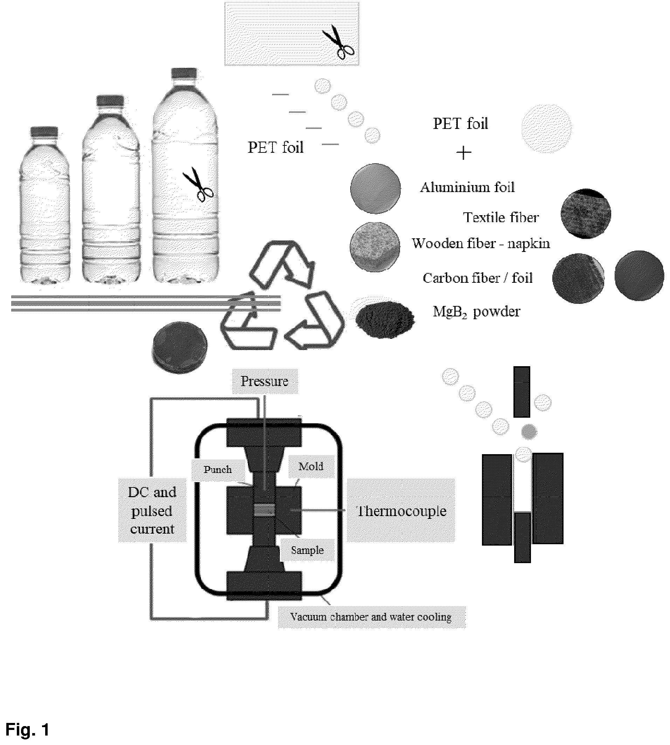

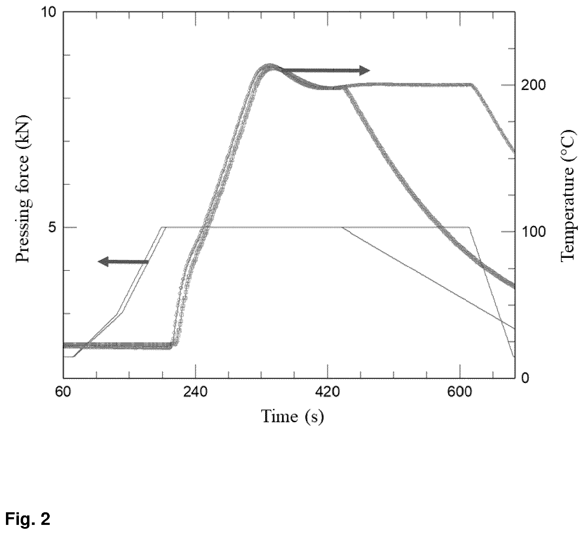

According to the invention, by using the process, layered composite materials formed from plastic material are obtained, preferably plastic foils from waste (preferably PET from packaging). Between the plastic material, preferably in the form of foil, the layered composite material has at least one reinforcing element (or intermediate layers) or can be in the form of foils (preferably Al, graphite), powders (preferably MgB₂) or fibers (textiles, wood) from organic or inorganic materials (Fig. 1). In a particularly preferred embodiment, the process comprises the following steps:
(1) cutting the plastic material in the form of foils, preferably PET, in the form of disks with a diameter of 20 mm and a thickness of 0.35 mm. Optionally, is cleaned with ethyl alcohol if necessary. The diameter of the foils was chosen to match the geometric specifications of the graphite die for SPS processing. The mold/punches used are cylindrical, but molds can be used in which the place where the foils are loaded can have various shapes (triangle, square, hexagon, etc.).
(2) placing the plastic material, preferably in the form of foils, and the reinforcing elements (in the form of loosely dispersed or pre-compacted powder/fibers, foils, or layers of different materials) successively in the mold in the desired order where the overlap of the layers is total or partial;
(3) sealing the mold thus loaded with foils with two graphite punches, while around the sample (the plastic foils, preferably PET, with the reinforcing element(s)) and the punches there is a separating graphite foil from the graphite mold which helps in easy extraction of the composite after SPS processing.
(4) inserting the mold into a hydraulic press and pressing at 5 kN in a time interval between 10 and 60 seconds; After depressurization, the mold with the pressed sample is inserted into the SPS furnace and aligned with the pistons of the facility.
(5) electric field assisted processing (SPS) using equipment manufactured by FCT Systeme GmbH (Germany). The massive sample is obtained following a heating-cooling cycle (Fig. 2) as follows: the heating rate is 100 °C /min, the dwell time at 200 °C is 1 min. for 2 foils or 3 min. for more foils. Cooling is done exponentially by suddenly turning off the power supply. During heating, an increasing pressure from 6 MPa is applied to the sample, reaching a maximum value of 16 MPa (pressing force 5 kN in Fig. 2), which is also maintained at the maximum processing temperature. Next, during cooling, the pressure is gradually reduced to 6 MPa, in 5 min. Processing is done under vacuum (between ~10 and ~60 Pa). The vacuum is obtained after placing the mold with the sample in the SPS furnace. Apply 2 or 3 vacuum cycles and introduce Ar gas up to 0.8-0.9 atm, thus cleaning the atmosphere in the SPS furnace. The temperature of the sample is monitored with the help of a thermocouple placed through a hole in the mold until close to the sample. The heating is carried out using intense electric currents (over 1300 A), which have a continuous component over which a pulsed component is superimposed, consisting of groups composed of 12 on pulses and 2 off pulses with a total duration of 40 ms. Between the pulses there is a pause of 2 ms. The intensity of the pulses in the groups is comparable to the intensity of the continuous component. At room temperature, the uniaxial pressure on the sample is brought to zero, Ar is introduced into the furnace until normal pressure is reached and the furnace is opened.
(6) Extraction of the processed sample from the graphite mold at room temperature is carried out with the help of a hydraulic press.

In a particularly preferred embodiment, the plastic foils were taken from Dorna^{®} (transparent/white) or Borsec^{®} (transparent/blue) water containers.

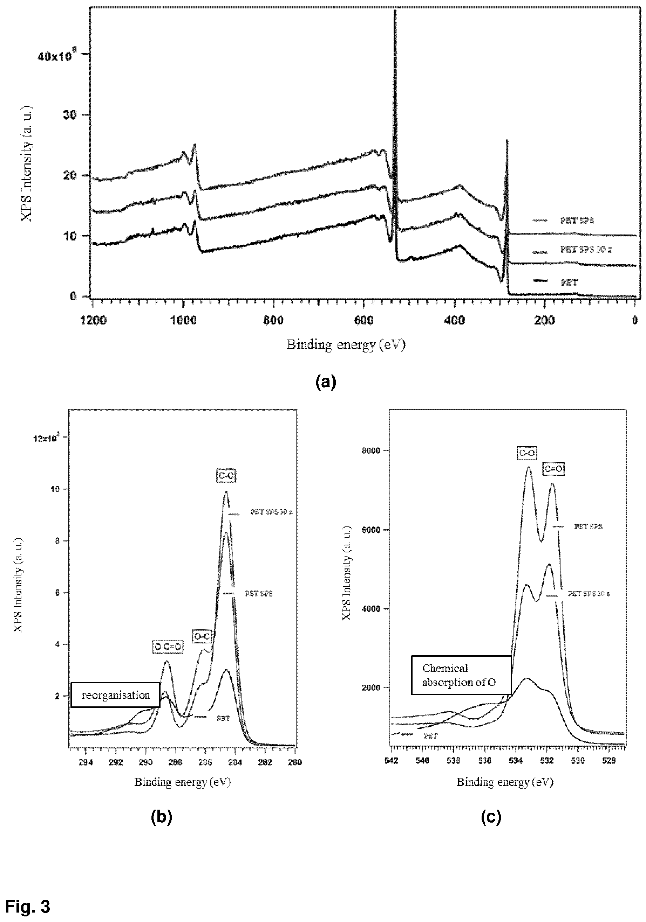

In this preferred embodiment, the SPS processing temperature was chosen to be below the melting temperature of the plastic material, namely the plastic foil, in particular the PET (~260 °C). Positive results leading to the bonding of the components of the layered composite material were obtained at a temperature in the range from 180 to 210 °C. The optimum SPS processing temperature of recycled PET composites is 200 °C. The overall X-ray photoemission spectra (XPS) and details for carbon (C1s) and oxygen (O1s) are shown in Figs. 3. The quantitative results estimated from the peak area are in Table 1. XPS was measured on a foil obtained acted from a container of water before SPS processing (sample A). Two foils are bonded by SPS and then mechanically exfoliated. The XPS spectrum was measured on the freshly exfoliated bonding surface (sample B). This sample was remeasured after 30 days of storage in air and in a desiccator prepared to absorb moisture (sample C). The comparative analysis between sample A and B highlights the change in carbon and oxygen spectra following SPS processing, which indicates the change in the surface state of PET. The XPS results for sample C show that air storage of the modified PET after SPS (sample B) produces a (partial) return to a surface state similar to that of the original sample A (Table 2, Fig. 3 b,c). The change in spectra between the initial sample A and the SPS-processed sample B is similar to the change in spectra measured on PET before and after plasma processing from the reference document [E. Gonzalez et al., Langmuir 24 12636-12643 (2008*)], [*J. Wang et al., Surface & Coatings Technology 186 299-304 (2004*)],* [L. Yang et al., Applied Surface Science 255 4446-4451 (2009*)], [*K. J. Pratt et al., Journal of Biomedical Materials Research 23 1131-1147 (1989*)*]*,* [N.L. Singh et al., Radiation Measurements 40 746 - 749 (2005*)], [*K. Uehara et al., Carbon-related Materials in Recognition of Nobel Lectures by Prof. Akira Suzuki in ICCE 391-418 (2017*)*]*.*

As in the case of plasma treatments of the PET foil, under the action of SPS, radicals (polar groups) -COOH and -OH are produced (at. % of C are decreasing and at. % of O are increasing, Table 1). By recombining them and acording to the chemical reaction:

-COOH + -OH → -COO- + H2O

the chemical bonds that ensure the adhesion of the PET foils are made [K. Uehara et al., Carbon-related Materials in Recognition of Nobel Lectures by Prof. Akira Suzuki in ICCE 391-418 (2017*)*]*,* [T. S. Salem, PET Surface Properties affected by low temperature plasma modification (doczz.net)]*,* [F. Leroux et al., Journal of Adhesion Science and Technology 20 939-957 (2006*)*].

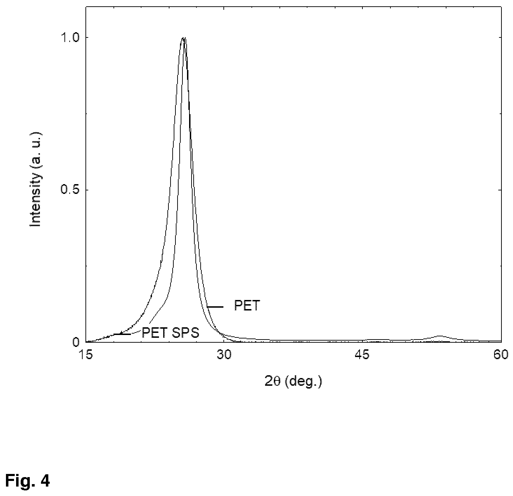

The X-ray diffraction from Fig. 4 taken before (sample A) and after SPS (sample B) shows that no major structural changes occurred. The material is crystalline and the only differences are related to the degree of crystallinity that increases (diffraction lines narrow) as a result of heating PET to 200 °C during SPS processing. No amorphous phases are observed in the X-ray diffraction spectra, indicating no melting has occured.

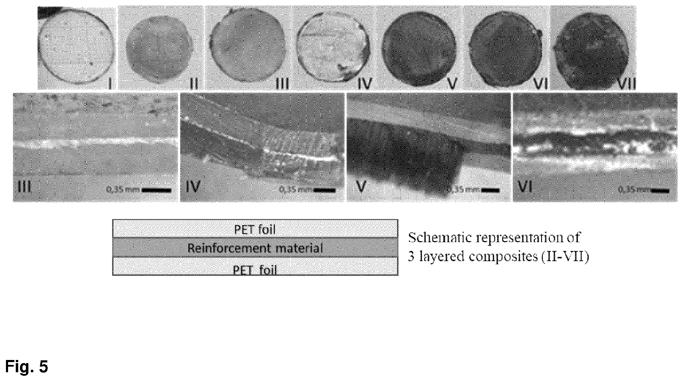

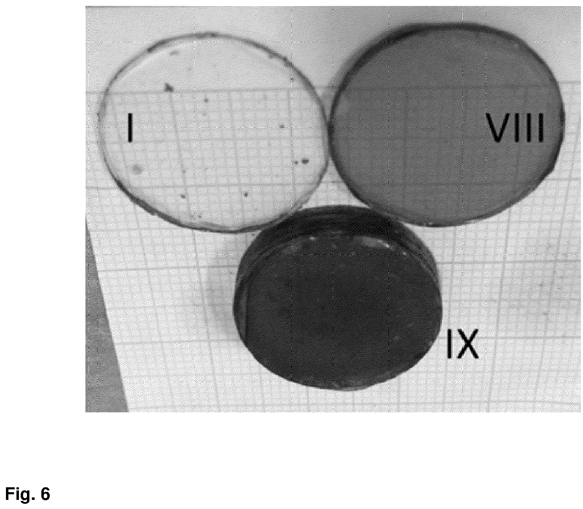

Observation by optical microscopy (Fig. 5) or scanning electron microscopy of the bonding areas confirms the lack of melting of the materials. This result is also supported by the fact that materials with PET foils without reinforcement maintain their transparency (sample I in Fig. 5, 6). Materials composed of more than three PET films (samples VIII and IX, Table 2, Fig. 5) gradually lose their transparency with increasing total thickness. From the above mentioned, the chosen SPS processing conditions produce effects similar to two-step bonding methods consisting of plasma irradiation of the surface and hot pressing [K. Uehara et al., Carbon-related Materials in Recognition of Nobel Lectures by Prof. Akira Suzuki in ICCE 391-418 (2017*)*] and does not rely on mass transfer processes specific to sintering.

The layered composite materials obtained by the process disclosed by the present invention (using plastic material, preferably foils from PET packaging or other industrial plastics selected from, but not limited to, PET, ABS, PVC, PE, Nylon, PA, PP , PC, PS) can be designed as required and thus used in applications in the electronics industry (e.g. moisture/electromagnetic protection of electronic circuits; coated/embedded connectors, conductors and insulators, devices and sensors), power industry and transports (thermal and/or electromagnetic protection/isolation of electric motors, corrosion protection), advanced packaging industry for food preservation (by oxygen protection or inert gas storage), biomedical applications requiring special functions (e.g. antimicrobial, self-cleaning ), the energy industry in the manufacture of solar cells (considering that the transparency of the PET SPS-processed) and batteries, in construction, aerospace, furniture and textile industries. Several comparative studies were carried out to highlight the quality of the product obtained by applying the process described by the present invention.

**Table 1 XPS results on samples of: PET (raw material from Borsec water containers) (sample A); PET after SPS and exfoliation (sample B); PET after SPS, exfoliation and storage in air for 30 days (sample C). Measurements B and C were performed on the bonding surface of a foil obtained by exfoliation from the material processed by SPS and composed of two PET foils.**

| **Material** | **Sample** | **C (1s) %at.** | **O (1s) %at.** |
|---|---|---|---|
| **PET** (raw material) | **A** | 78.8 | 21.2 |
| **PET SPS** (2 exfoliated foils immediately after SPS) | **B** | 73.0 | 27.0 |
| **PET SPS 30z** (2 exfoliated foils stored in air for 30 days after SPS) | **C** | 80.3 | 19.7 |

**Table 2 Layered composite materials with recycled PET foils matrix and with different reinforcements. The notations of the samples are as in Fig. 4 and 5.**

| **Composite material** | **Sample No.** | **No. Composite layers** | **Matrix material details** | **Reinforcement material details** |
|---|---|---|---|---|
| PET-PET | I (Fig. 4, 5) | 2 | PET (polyethylene terephthalate 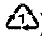 ) transparent, recycled from Dorna mineral water containers; foil of ~0.35 µm thickness; melting temperature ~260 °C | - |
| PET-Textile (tiv)-PET | II (Fig. 4) | 3 | | Textile tape - thickness ~0.15 mm/ Stoklasa textilni galanterie s.r.o. |
| PET-Napkin-PET | III (Fig. 4) | 3 | | wood fiber - cleaning wipes / thickness ~0.08 mm/ Kimtech Kimwipes Science |
| PET-AI foil-PET | IV (Fig. 4) | 3 | | aluminum foil - thickness 11 µm / Delhaize Le Lion |
| PET -C fiber-PET | V (Fig. 4) | 3 | | carbon fiber - thickness 0.2 mm /Spania ClipCarbono |
| PET -C foil - PET | VI (Fig. 4) | 3 | | carbon foil - thickness 0.4 mm / FCT Systeme GmbH |
| PET-MgB₂ powder- PET | VII (Fig. 4) | 3 | | MgB₂ powder/ LTS Research Laboratories Inc / the thickness of the composite layer ~40µm |
| PET- PET - PET | VIII (Fig. 5) | 3 | PET (polyethylene terephthalate transparent/blue 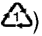 transparent/blue recycled from Borsec mineral water containers; - thickness ~0.35 mm; melting temperature ~260 °C | - |
| PET-multilayer | IX (Fig. 5) | 10 | | |

**Table 3 Preferred layered composite materials that can be obtained according to the invention, their aplications and their industrial field of use.**

| **No.** | **Composite** | **Plastic material** | **Reinforcement material and properties** | **Applications** | **Industry** |
|---|---|---|---|---|---|
| 1 | Plastic-Metal; | e.g. PET, PS, PVC, LDPE | e.g. Cu, Au, Ti, Al, alloys; | Electrical switches, electrical connectors, electrical fuses, resistive heating elements, magnetic shielding elements, etc. | Transports (cars), Electrotechnic s, Constructions, Household appliances |
| | Plastic-Metal-Plastic | | Properties: electrical conduction, thermal conduction | | |
| 2 | Plastic-inorganic material; | e.g. PET, PS, PVC, LDPE | e.g. C fiber | Heat transfer elements | Automotive, Construction, Electrical engineering |
| | Plastic-inorganic material-Plastic | | Properties: conduction/therm al insulation | | |
| 3 | Plastic-ceramic; | e.g. PET, PS, PVC, LDPE | e.g. Al₂O₃, ZrO₂ | Thermal and electrical insulation elements | Energetics, Constructions, Electrotechnics |
| | Plastic-ceramic-Plastic | | Properties: thermal resistance and electrical resistivity (dielectrics) | | |
| 4 | Plastic - Supercond ucting material; | e.g. PET, PS, PVC, LDPE | e.g. Nb, V, Nb₃Sn, NbTi, MgB₂, YBa₂Cu₃O₇, Bi₂Sr₂CaCu₂O₈, Bi₂Sr₂Ca₂Cu₃O₁₀ | Current limiters, magnetic shields/filters/se parators, magnetic sensors/wires and superconducting cables | Power, Energy, Transport, Medical, Space, Mining |
| | Plastic-Supercond ucting material - Plastic | | Properties: superconductivity , diamagnetism | | |
| 5 | Plastic-magnetic; | e.g. PET, PS, PVC, LDPE | e.g. NdFeB, BiMn, REFeO₃ Magnetic properties | Permanent magnets, sensors, magnetic components, electromagnetic actuators | Automotive, Electrical, |
| | Plastic-magnetic-Plastic | | | | |
| 6 | Plastic-optic; | e.g. PET, PS, PVC, LDPE | e.g. SeTe, GeTe, ZnS, Ce dopped with RE | Optical converters, luminescent radiation filters, mirrors, light radiation attenuators, components in solar cells | Automotive, Energy, Optics, Optoelectronics |
| | Plastic-optic-Plastic | | Properties: luminescence, photoluminescence, optical transparency, luminescent conversion | | |
| 7 | Plastic-metal/hard ceramic; | e.g. PET, PS, PVC, LDPE | e.g. Ti, W, B₄C, SiC, TiB₂ | Mechanical shock protection | Automotive, Construction, Space, Electrotechnics |
| | Plastic-metal/hard ceramic-Plastic | | Properties: mechanical resistance | | |
| 8 | Plastic-biomaterial | e.g. PET, PS, PVC, LDPE | e.g. Ag, Ti, MgB₂, Ca₅(PO₄)₃(OH), CaO, CaCO₃, NaCl, MgO, SiO₂,Al₂O₃, ZrO₂ | Antibacterial protection, sterile dressings, sterile packaging, prostheses/orth eses, medical instruments | Medical |
| | Plastic-biomaterial -Plastic | | Properties: biocompatibility, bioinertia, bioresorbability, bioactivity | | |
| 9 | Plastic-Metal1-Plastic-Metal2-Plastic | e.g. PET, PS, PVC, LDPE | e.g. Cu, Al | Electric switches, resistive heating elements | Automotive, Electrical engineering |
| | | | Electrical and thermal conduction properties | | |
| 10 | Plastic-Metal1-Metal2-Plastic | e.g. PET, PS, PVC, LDPE | e.g. Cu, Al | Electric switches, resistive heating elements | Automotive, Electrical engineering |
| | | | Electrical and thermal conduction properties | | |
| 11 | Plastic-Metal-Inorganic-Plastic | e.g. PET, PS, PVC, LDPE | e.g. Cu, C-folie | Electrical and thermal conductors | Automotive, Electrical engineering |
| | | | Electrical and thermal conduction properties | | |
| 12 | Plastic-organic; | e.g. PET, PS, PVC, LDPE | e.g. wood fiber or paper napkin (cotton) | Thermal and electrical insulators, anti-corrosion | Automotive, Energy, Electrotechnic s, Constructions, Furniture, Packaging |
| | Plastic-organic-plastic | | Electrical conduction (insulators) and thermal properties | | |
| 13 | Plastic-acustic; | e.g. PET, PS, PVC, LDPE | e.g. wood fibers | Acoustic components for musical instruments, furniture and room accessories with controlled sound | Furniture construction |
| | Plastic-acustic-plastic | | Acoustic properties | | Musical instruments |
| 14 | Plastic-reinforcement with controlled degradation | e.g. PET, PS, PVC, LDPE | e.g. Metals: Zn, Mg, Fe, Al, Cu and organic: wood fibers, bamboo, cotton, linen, cane | Furniture, components, chemical protection, sensors | Transports, Constructions, Furniture, Electrotechnics , Chemicals |
| | | | Corrosion properties or corrosion resistance | | |
| 15 | Plastic-magnetic -electric-Plastic | e.g. PET, PS, PVC, LDPE | e.g.: BiMn magnetic and Cu electric conductor | Sensors, switches | Electrotechnics |

By applying the process disclosed by the present invention, layered composite materials are obtained which have the following advantages compared to the existing layered composite materials in the state of the art:
- Bonding between layers is done directly, without melting, with the formation of chemical bonds at the interface between two materials in a single processing step;
- The properties of the component materials of the composite do not change in volume after using the process of obtaining the composite by the proposed process.
- Because no adhesives are used, there are no problems related to toxicity and pollution;
- The raw materials were taken from waste such as plastic packaging, preferably in the form of foil; this is important because the impact of this waste on the environment is reduced.
- It is a simple process that does not require special preparation/processing of the raw materials.
- The layered composite material obtained by the process of the invention can be designed by assembling the layers in the desired order and placed into certain region(s) according to the requirments of the applications.
- The use of the process with the application of SPS forms chemical bonds between the component layers of the material, which leads to their increased mechanical resistance compared to similar composite materials obtained through conventional processes in which matrix breakage causes damage to the material and reinforcement does not contribute to maintaining the integrity and mechanical resistance: in the case of the materials obtained by the presented process, the layered composite material better retain its structural integrity and mechanical resistance due to the chemical bonds that are established between the matrix and the reinforcement.

## Claims

1. A process for obtaining a layered composite material comprising obtaining a sample by placing at least one first layer and a second layer, one on top of the other, wherein
- the first layer is a plastic material and
- the second layer is a reinforcing element
and processing thereof by applying intense electric field sintering technique or Spark Plasma Sintering in a mold to obtain a layered composite material **characterized by** the following steps
- *a vacuum step* by applying at least 2 cycles of vacuum with the pressure in the furnance varying between 10 and 60 Pa and an Argon gas cleaning at a presure of 0.8-0.9 atm.;
- a *heating step,* taking place at a speed of 50 - 200°C/min, preferably 100°C, with an uniaxial pressure on the sample during heating being in the range from 10 to 100 MPa, preferably at 16 MPa, a dwell time at the maximum temperature being between 1 - 10 minutes, preferably 2 minutes; the heating step being performed using electric currents with a continuous component over which a pulsed component is superimposed consisting of groups composed of 12 pulses "on" and 2 pulses "off" with a total duration of 40 ms with a 2ms pause between the pulses;
- a *cooling step* which is done exponentially, by stopping the power supply to the heat source and decreasing the uniaxial pressure on the sample so that at room temperature it reaches the value of 6 MPa in a time interval between 5 and 10 minutes, depending on the size of the sample.

2. The process for obtaining a layered composite material according to claim 1 wherein the layer with the reinforcing element overlaps totally or partially over the layer of plastic material.

3. The process according to any of the preceding claims wherein the plastic material is selected from polyethylene terephthalate (PET), polyethylene (PE), polyvinyl chloride (PVC), polypropylene (PP), polystyrene (PS), acrylonitrile butadiene styrene (ABS) , polyamide (PA or nylon), polycarbonate (PC), preferably in foil form.

4. The process according to any of the preceding claims wherein the reinforcing element is selected from organic or inorganic materials with different physico-chemical properties.

5. The process according to claim 4 wherein the reinforcing element is selected from inorganic materials with electrically or thermally conductive/insulating properties such as: metals or alloys preferably selected from Cu, Au, Ti, Al, alloys thereof selected from steels, alloys of Al, Ti, Ni, etc., ceramic materials preferably selected from Al₂O₃, B₄C, BN, SiC, SiO₂/glass, MgB₂, etc., carbonaceous materials preferably selected from carbon fibers, graphene, and organic materials with electrical or thermal conductive/insulating properties preferably selected from wooden materials such as wood fibers, bamboo, cotton, linen, cane.

6. The process according to claim 4 wherein the reinforcing element is selected from inorganic materials with superconducting properties such as: metals or alloys preferably selected from Nb, V, La, Nb₃Sn, NbTi, etc. and ceramic materials preferably selected from MgB₂, YBa₂Cu₃O₇, Bi₂Sr₂CaCu₂O₈, Bi₂Sr₂Ca₂Cu₃O₁₀.

7. The process according to claim 4 wherein the reinforcing element is selected from inorganic materials with magnetic/non-magnetic properties such as metals/alloys preferably selected from Fe, Ni, Co, steel, rare earths (RE), Al, Au, Ag, Cu and ceramic materials preferably selected from NdFeB, BiMn, REFeO₃.

8. The process according to claim 4 wherein the reinforcing element is selected from inorganic materials with optical properties such as ceramic materials preferably selected from SeTe, GeTe, ZnS, Ce doped with rare earths (RE).

9. The process according to claim 4 wherein the reinforcing element is selected from inorganic materials with mechanical properties such as metals/alloys preferably selected from Cu, Au, Ti, Al, or alloys thereof, ceramic materials preferably selected from carbides, borides, nitrides , oxides selected preferably from B₄C, SiC, TiB₂, MgB₂, BN, Al₂O₃, SiO₂/glass, carbonaceous materials preferably selected from carbon fibers, graphene, and organic materials with mechanical properties such as wooden materials preferably selected from wood fibers, bamboo, cotton, linen, cane.

10. The process according to claim 4 wherein the reinforcing element is selected from inorganic materials with inert or active biological properties: metals preferably selected from Ag, Cu, ceramic materials preferably selected from MgB₂, Ca₅(PO₄)₃(OH), CaO, CaCO₃, NaCl, MgO, SiO₂, Al₂O₃, ZrO₂, Si/glass and organic materials with biological properties such as wooden materials preferably selected from wood fibers, bamboo, cotton, linen, cane.

11. The process according to claim 4 wherein the reinforcing element is selected from organic materials with acoustic properties such as wooden materials preferably selected from wood fibers, bamboo, cotton, linen, cane.

12. The process according to claim 4 wherein the reinforcing element is selected from inorganic materials with inert or active stability/controlled degradation chemical properties: metals/alloys preferably selected from Zn, Mg, Fe, Ca, Na, etc., and organic materials with inert or active chemical properties such as wooden materials preferably selected from wood fibers, bamboo, cotton, linen, cane.

## Patentansprüche

1. Verfahren zur Herstellung eines geschichteten Verbundwerkstoffs, umfassend das Herstellen einer Probe durch übereinanderanordnen mindestens einer ersten Schicht und einer zweiten Schicht, wobei
- die erste Schicht aus einem Kunststoff besteht und
- die zweite Schicht ein Verstärkungselement ist,
sowie deren Weiterverarbeitung durch Anwendung des Sinterns unter starkem elektrischem Feld oder des Spark-Plasma-Sinterns in einer Form, um ein geschichtetes Verbundmaterial zu erhalten, **gekennzeichnet durch** die folgenden Schritte - einem Vakuumschritt, bei dem mindestens 2 Vakuumzyklen durchgeführt werden, wobei der Druck im Ofen zwischen 10 und 60 Pa schwankt, sowie einer Argon-Gasreinigung bei einem Druck von 0,8-0,9 atm;
- einen Aufheizschritt, der mit einer Geschwindigkeit von 50-200°C/min, vorzugsweise 100°C, erfolgt, wobei der einachsige Druck auf die Probe während des Aufheizens im Bereich von 10 bis 100 MPa, vorzugsweise bei 16 MPa, liegt, wobei die Verweildauer bei der Maximaltemperatur zwischen 1 und 10 Minuten, vorzugsweise 2 Minuten, beträgt; wobei der Aufheizschritt unter Verwendung elektrischer Ströme mit einer Gleichstromkomponente durchgeführt wird, der eine gepulste Komponente überlagert ist, die aus Gruppen besteht, die sich aus 12 "Ein"-Impulsen und 2 "Aus"-Impulsen zusammensetzen, mit einer Gesamtdauer von 40 ms und einer Pause von 2ms zwischen den Impulsen;
- ein Abkühlschritt, der exponentiell erfolgt, indem die Stromversorgung der Wärmequelle unterbrochen und der einachsige Druck auf die Probe so verringert wird, dass er bei Raumtemperatur in einem Zeitintervall zwischen 5 und 10 Minuten, abhängig von der Größe der Probe, den Wert von 6 MPa erreicht.

2. Verfahren zur Herstellung eines geschichteten Verbundwerkstoffs gemäß Anspruch 1, wobei die Schicht mit dem Verstärkungselement die Schicht aus Kunststoff ganz oder teilweise überlappt.

3. Verfahren nach einem der vorstehenden Ansprüche, wobei das Kunststoffmaterial aus Polyethylenterephthalat (PET), Polyethylen (PE), Polyvinylchlorid (PVC), Polypropylen (PP), Polystyrol (PS), Acrylnitril-Butadien-Styrol (ABS), Polyamid (PA oder Nylon) und Polycarbonat (PC), vorzugsweise in Form einer Folie, ausgewählt wird.

4. Verfahren gemäß einem der vorstehenden Ansprüche, wobei das Verstärkungselement aus organischen oder anorganischen Materialien mit unterschiedlichen physikalisch-chemischen Eigenschaften ausgewählt wird.

5. Verfahren nach Anspruch 4, wobei das Verstärkungselement aus anorganischen Materialien mit elektrisch oder thermisch leitenden bzw. isolierenden Eigenschaften ausgewählt ist, wie: Metalle oder Legierungen, vorzugsweise ausgewählt aus Cu, Au, Ti, Al, deren Legierungen, ausgewählt aus Stählen, Legierungen von Al, Ti, Ni usw., Keramikmaterialien, vorzugsweise ausgewählt aus Al2O3, B4C, BN, SiC, SiO2/Glas, MgB2, usw., kohlenstoffhaltige Materialien, vorzugsweise ausgewählt aus Kohlenstofffasern, Graphen, und organische Materialien mit elektrisch oder thermisch leitenden bzw. isolierenden Eigenschaften, vorzugsweise ausgewählt aus Holzwerkstoffen wie Holzfasern, Bambus, Baumwolle, Leinen, Schilf.

6. Verfahren nach Anspruch 4, wobei das Verstärkungselement aus anorganischen Materialien mit supraleitenden Eigenschaften ausgewählt ist, wie: Metalle oder Legierungen, vorzugsweise ausgewählt aus Nb, V, La, Nb3Sn, NbTi usw., und keramische Materialien, vorzugsweise ausgewählt aus MgB2, YBa₂Cu₃O₇, Bi2Sr2CaCu2Og, Bi2Sr2Ca2Cu3O10.

7. Verfahren nach Anspruch 4, wobei das Verstärkungselement aus anorganischen Materialien mit magnetischen bzw. nichtmagnetischen Eigenschaften ausgewählt ist, wie Metalle bzw. Legierungen, vorzugsweise ausgewählt aus Fe, Ni, Co, Stahl, seltenen Erden (RE), Al, Au, Ag, Cu und Keramikmaterialien, die vorzugsweise aus NdFeB, BiMn, REFeO3 ausgewählt sind.

8. Verfahren nach Anspruch 4, wobei das Verstärkungselement aus anorganischen Materialien mit optischen Eigenschaften ausgewählt ist, wie Keramikmaterialien, die vorzugsweise aus SeTe, GeTe, ZnS, mit seltenen Erden (RE) dotiertem Ce ausgewählt sind.

9. Verfahren nach Anspruch 4, wobei das Verstärkungselement aus anorganischen Materialien mit mechanischen Eigenschaften ausgewählt ist, wie Metallen/Legierungen, vorzugsweise ausgewählt aus Cu, Au, Ti, Al oder Legierungen davon, sowie aus keramischen Materialien, vorzugsweise ausgewählt aus Karbiden, Boriden, Nitriden und Oxiden, vorzugsweise ausgewählt aus B4C, SiC, TiB2, MgB2, BN, Al2O3, SiO2/Glas, kohlenstoffhaltige Materialien, vorzugsweise ausgewählt aus Kohlenstofffasern und Graphen, sowie organische Materialien mit mechanischen Eigenschaften, wie Holzwerkstoffe, vorzugsweise ausgewählt aus Holzfasern, Bambus, Baumwolle, Leinen, Schilf.

10. Verfahren nach Anspruch 4, wobei das Verstärkungselement aus anorganischen Materialien mit inerten oder aktiven biologischen Eigenschaften ausgewählt ist: Metalle, vorzugsweise ausgewählt aus Ag, Cu, Keramikmaterialien, vorzugsweise ausgewählt aus MgB2, Ca5(PO4)3(OH), CaO, CaCO3, NaCl, MgO, SiO2, Al2O3, ZrO2, Si/Glas sowie organischen Materialien mit biologischen Eigenschaften, wie Holzmaterialien, vorzugsweise ausgewählt aus Holzfasern, Bambus, Baumwolle, Leinen, Schilf.

11. Verfahren nach Anspruch 4, wobei das Verstärkungselement aus organischen Materialien mit akustischen Eigenschaften ausgewählt ist, wie Holzwerkstoffen, vorzugsweise ausgewählt aus Holzfasern, Bambus, Baumwolle, Leinen, Schilf.

12. Verfahren nach Anspruch 4, wobei das Verstärkungselement aus anorganischen Materialien mit inerten oder aktiven chemischen Eigenschaften hinsichtlich Stabilität bzw. kontrolliertem Abbau ausgewählt ist: Metalle/Legierungen, vorzugsweise ausgewählt aus Zn, Mg, Fe, Ca, Na usw., sowie organischen Materialien mit inerten oder aktiven chemischen Eigenschaften, wie Holzwerkstoffen, vorzugsweise ausgewählt aus Holzfasern, Bambus, Baumwolle, Leinen, Schilf.

## Revendications

1. Procédé d'obtention d'un matériau composite stratifié, comprenant l'obtention d'un échantillon par superposition d'au moins une première couche et d'une deuxième couche, l'une sur l'autre, dans lequel
- la première couche est un matériau plastique et
- la deuxième couche est un élément de renforcement,
puis de traiter celui-ci en appliquant une technique de frittage par champ électrique intense ou de frittage par plasma d'étincelles dans un moule afin d'obtenir un matériau composite stratifié, **caractérisé par** les étapes suivantes - une étape de vide consistant à appliquer au moins 2 cycles de vide, la pression dans le four variant entre 10 et 60 Pa, et un rinçage à l'argon à une pression de 0,8-0,9 atm.;
- une étape de chauffage, s'effectuant à une vitesse de 50 - 200°C/min, de préférence de 100°C, avec une pression uniaxiale exercée sur l'échantillon pendant le chauffage comprise entre 10 et 100 MPa, de préférence de 16 MPa, le temps de maintien à la température maximale étant compris entre 1 - 10 minutes, de préférence 2 minutes; l'étape de chauffage étant réalisée à l'aide de courants électriques comportant une composante continue sur laquelle se superpose une composante pulsée constituée de groupes composés de 12 impulsions "activées" et de 2 impulsions "désactivées", d'une durée totale de 40 ms avec une pause de 2ms entre les impulsions;
- une étape de refroidissement qui s'effectue de manière exponentielle, en coupant l'alimentation électrique de la source de chaleur et en réduisant la pression uniaxiale exercée sur l'échantillon de sorte qu'à température ambiante, celle-ci atteigne la valeur de 6 MPa dans un intervalle de temps compris entre 5 et 10 minutes, en fonction de la taille de l'échantillon.

2. Procédé d'obtention d'un matériau composite stratifié selon la revendication 1, dans lequel la couche comportant l'élément de renforcement recouvre totalement ou partiellement la couche de matière plastique.

3. Procédé selon l'une quelconque des revendications précédentes, dans lequel la matière plastique est choisie parmi le polyéthylène téréphtalate (PET), le polyéthylène (PE), le polychlorure de vinyle (PVC), le polypropylène (PP), le polystyrène (PS), l'acrylonitrile-butadiène-styrène (ABS), le polyamide (PA ou nylon) et le polycarbonate (PC), de préférence sous forme de feuille.

4. Procédé selon l'une quelconque des revendications précédentes, dans lequel l'élément de renforcement est choisi parmi des matériaux organiques ou inorganiques présentant des propriétés physico-chimiques différentes.

5. Procédé selon la revendication 4, dans lequel l'élément de renforcement est choisi parmi des matériaux inorganiques présentant des propriétés de conductivité ou d'isolation électrique ou thermique, tels que: des métaux ou des alliages choisis de préférence parmi le Cu, Au, Ti, Al, leurs alliages choisis parmi les aciers, les alliages d'AI, de Ti, de Ni, etc., des matériaux céramiques choisis de préférence parmi l'Al2O3, B4C, BN, SiC, SiO2/verre, MgB2, etc., des matériaux carbonés choisis de préférence parmi les fibres de carbone, le graphène, et des matériaux organiques présentant des propriétés de conductivité ou d'isolation électrique ou thermique, choisis de préférence parmi les matériaux dérivés du bois tels que les fibres de bois, le bambou, le coton, le lin, la canne.

6. Procédé selon la revendication 4, dans lequel l'élément de renforcement est choisi parmi des matériaux inorganiques présentant des propriétés supraconductrices, tels que: des métaux ou des alliages choisis de préférence parmi le Nb, V, La, Nb3Sn, NbTi, etc., et des matériaux céramiques choisis de préférence parmi le MgB2, YBa₂Cu₃O₇, Bi2Sr2CaCu2Og, Bi2Sr2Ca2Cu3O10.

7. Procédé selon la revendication 4, dans lequel l'élément de renforcement est choisi parmi des matériaux inorganiques présentant des propriétés magnétiques ou non magnétiques, tels que des métaux ou des alliages, de préférence choisis parmi le Fe, Ni, Co, d'acier, des terres rares (RE), Al, Au, Ag, Cu et des matériaux céramiques choisis de préférence parmi le NdFeB, BiMn, REFeO3.

8. Procédé selon la revendication 4, dans lequel l'élément de renforcement est choisi parmi des matériaux inorganiques présentant des propriétés optiques, tels que des matériaux céramiques, de préférence choisis parmi le SeTe, GeTe, ZnS, Ce dopé aux terres rares (RE).

9. Procédé selon la revendication 4, dans lequel l'élément de renforcement est choisi parmi des matériaux inorganiques présentant des propriétés mécaniques, tels que des métaux/alliages choisis de préférence parmi le Cu, Au, Ti, Al ou leurs alliages, des matériaux céramiques choisis de préférence parmi les carbures, les borures, les nitrures et les oxydes, sélectionnés de préférence parmi le B4C, SiC, TiB2, MgB2, BN, Al2O3, SiO2/verre, des matériaux carbonés choisis de préférence parmi les fibres de carbone et le graphène, et des matériaux organiques présentant des propriétés mécaniques, tels que des matériaux à base de bois choisis de préférence parmi les fibres de bois, le bambou, le coton, le lin, la canne.

10. Procédé selon la revendication 4, dans lequel l'élément de renforcement est choisi parmi des matériaux inorganiques présentant des propriétés biologiques inertes ou actives: des métaux choisis de préférence parmi l'Ag, Cu, des matériaux céramiques choisis de préférence parmi le MgB2, Ca5(PO4)3(OH), CaO, CaCO3, NaCl, MgO, SiO2, Al2O3, ZrO2, le Si/verre et des matériaux organiques présentant des propriétés biologiques, tels que des matériaux à base de bois choisis de préférence parmi les fibres de bois, le bambou, le coton, le lin, la canne.

11. Procédé selon la revendication 4, dans lequel l'élément de renforcement est choisi parmi des matériaux organiques présentant des propriétés acoustiques, tels que des matériaux à base de bois, de préférence choisis parmi les fibres de bois, le bambou, le coton, le lin, la canne.

12. Procédé selon la revendication 4, dans lequel l'élément de renforcement est choisi parmi des matériaux inorganiques présentant des propriétés chimiques inertes ou actives de stabilité/dégradation contrôlée: métaux/alliages choisis de préférence parmi le Zn, Mg, Fe, Ca, Na, etc., et de matériaux organiques présentant des propriétés chimiques inertes ou actives, tels que des matériaux à base de bois choisis de préférence parmi les fibres de bois, le bambou, le coton, le lin, la canne.
